# EUROPÄISCHE PATENTSCHRIFT

(11) **EP 3 344 708 B1**
(45) Veröffentlichungstag und Bekanntmachung des Hinweises auf die Patenterteilung: **17.04.2019**
(21) Anmeldenummer: 16760401.6
(22) Anmeldetag: 18.08.2016
(51) Int. Cl.: C09D 5/00

(54) **KORROSIONSSCHUTZMITTEL UND VERFAHREN ZUM KONSERVIEREN EINES HOHLRAUMES**
CORROSION PROTECTION AGENT AND METHOD FOR THE PRESERVATION OF A CAVITY
PRODUIT ANTICORROSIF ET PROCÉDÉ DE PROTECTION D'UN CORPS CREUX

(30) Priorität: 01.09.2015 DE 102015216701
(43) Veröffentlichungstag der Anmeldung: 11.07.2018
(73) Patentinhaber: Bayerische Motoren Werke Aktiengesellschaft, 80809 München (DE)
(72) Erfinder: VIEHBECK, Stefan, 84130 Dingolfing (DE); MAYER, Guenther, 84092 Bayerbach (DE); TROFFER, Johann, 94431 Pilsting (DE)
(86) Internationale Anmeldenummer: PCT/EP2016/069552
(87) Internationale Veröffentlichungsnummer: WO 2017/036804

(56) Entgegenhaltungen:
- EP-A1- 0 003 817
- EP-A2- 0 292 762
- WO-A2-2009/103551
- DE-A1- 2 716 845
- DE-A1- 4 240 810
- DE-A1-102011 108 215
- US-A- 2 858 285
- US-A- 2 873 210
- US-A- 4 094 837
- US-A- 5 288 805

## Beschreibung

Die vorliegende Erfindung betrifft ein Korrosionsschutzmittel, das insbesondere in der Hohlraumkonservierung Anwendung findet, also in Hohlräumen, wie sie z.B. in Fahrzeugkarosserien vorzufinden sind. Darüber hinaus betrifft die vorliegende Erfindung auch ein Verfahren zum Konservieren eines Hohlraumes.

Hohlraumkonservierungen sind insbesondere aus dem Fahrzeugbau bekannt und bieten nach Applikation, beispielsweise auf ein metallisches Element, einen guten Schutz vor Korrosion durch auf das metallische Element einwirkendes Wasser oder eine feuchtigkeitshaltige Umgebung. Übliche Hohlraumkonservierungsmittel enthalten Wachse oder Harze sowie Korrosionsschutzadditive, die durch Dispergieren in Lösungsmitteln applizierfähig gemacht werden. Nach dem Abtrocknen, Härten und ggf. Vernetzen des Hohlraumkonservierungsmittels bildet das Hohlraumkonservierungsmittel auf der applizierten Oberfläche einen vor Korrosion schützenden Film. Nachteilig an herkömmlichen Hohlraumkonservierungsmitteln ist, dass sie eine lange Trocknungs- bzw. Vernetzungsdauer und oftmals eine nicht vollständige Durchtrocknung zeigen. Dies erhöht die Verfahrenskosten für die Konservierung und erfordert oftmals eine manuelle Nachbehandlung zur Entfernung von Resten der Hohlraumkonservierung.

Ausgehend von diesem Stand der Technik ist es Aufgabe der vorliegenden Erfindung, ein Korrosionsschutzmittel bereitzustellen, das sich durch eine hohe, und gezielt steuerbare Trocknungs- bzw. Härtungsrate und Vernetzung auszeichnet. Darüber hinaus ist es Aufgabe der vorliegenden Erfindung, ein Verfahren zum Konservieren eines Hohlraumes anzugeben, das zeitsparend und einfach, ohne hohen technischen Aufwand umsetzbar ist und durch dessen Anwendung ohne aufwendige Nacharbeit ein gleichmäßiger Korrosionsschutzfilm erhalten werden kann.

Die Aufgabe wird durch ein Korrosionsschutzmittel gemäss Anspruch 1 gelöst, das mindestens die nachfolgenden Bestandteile enthält: a) mindestens ein Korrosionsschutzadditiv, b) mindestens eine ungesättigte Verbindung, ausgewählt aus ungesättigten Ölen und/oder ungesättigten Fettsäuren, c) mindestens ein redoxaktives Metallsalz und/oder Metalloxid und d) mindestens eine durch radikalische Polymerisation vernetzende Verbindung. Das Korrosionsschutzmittel ist insbesondere für die Hohlraumkonservierung ausgebildet, beispielsweise im Fahrzeugbau.

Das Korrosionsschutzadditiv umfasst übliche, auf diesem Gebiet eingesetzte Korrosionsschutzadditive, wie z.B. Alkali- und Erdalkalisulfonate, Salicylate, Wollfette und Kombinationen daraus. Besonders bevorzugt wird Calciumsulfonat eingesetzt, da es zu moderaten Preisen erhältlich ist und neben einer guten Verarbeitbarkeit eine sehr gute Korrosionsschutzwirkung aufweist.

Die durch radikalische Polymerisation vernetzende Verbindung ist im Einzelnen nicht beschränkt. Üblicherweise handelt es sich hierbei erfindungsgemäß um ein ungesättigtes Harz, also um eine ungesättigte, und somit eine oder mehrere Doppelbindungen enthaltende polymere Verbindung. Sie ist die Verbindung in dem erfindungsgemäßen Korrosionsschutzmittel, die maßgeblich zur Bildung des konservierenden Korrosionsschutzfilms beiträgt. Hierzu wird in Verbindung mit Sauerstoff durch die Komponenten des erfindungsgemäßen Korrosionsschutzmittels eine radikalische Vernetzungsreaktion der vernetzenden Verbindung initiiert und ausgeführt. Durch die Vernetzungsreaktion härtet der Schutzfilm sozusagen aus, bildet ein zwei- oder sogar dreidimensionales Gefüge, das widerstandsfähig gegenüber einwirkender Feuchtigkeit ist und von Wasser nicht angegriffen wird.

Die radikalische Vernetzungsreaktion ist eine oxidative Härtung der vernetzenden Verbindung, die durch das Diradikal Sauerstoff initiiert und teilweise auch propagiert wird. Die Aktivierungsenergie für diese Vernetzungsreaktion ist jedoch zumeist so hoch, dass keine ausreichende Reaktionsgeschwindigkeit erzielt werden kann. Zur Beschleunigung von solchen Vernetzungsreaktionen können Metallkatalysatoren eingesetzt werden. Es hat sich jedoch auch hier gezeigt, dass die Vernetzung nicht mit der gewünschten Trocknungs- bzw. Härtungsrate erfolgt. Erst durch die erfindungswesentliche Kombination mindestens einer ungesättigten Verbindung, ausgewählt aus einfach oder mehrfach ungesättigten Ölen und/oder ungesättigten Fettsäuren und mindestens einem redoxaktiven Metallsalz und/oder Metalloxid (es können auch Mischungen von einem oder mehreren Metallsalzen oder einem oder mehreren Metalloxiden oder auch Mischungen von einem oder mehreren Metallsalzen mit einem oder mehreren Metalloxiden vorliegen) kann ein Korrosionsschutzmittel mit sehr guter Trocknungsrate und damit hoher Vernetzungsgeschwindigkeit und exzellenter, dauerhaft haftender Korrosionsschutzwirkung bereitgestellt werden.

Ohne an die Theorie gebunden zu sein wird angenommen, dass bei Applikation des Korrosionsschutzmittels in sauerstoffhaltiger Atmosphäre ein Sauerstoffdiradikal an der ungesättigten Verbindung (einfach oder mehrfach ungesättigte Verbindung) angreift und ein Hydroperoxidmolekül gebildet wird. Das Hydroperoxidmolekül wird reduziert, wobei es unter Katalyse des Metallsalzes oder Metalloxids und unter Bildung eines an die ungesättigte Verbindung gebundenen Sauerstoffatomradikals und eines Hydroxidions gespaltet wird. Die Hydroperoxidspaltung wird durch das Metallsalz oder Metalloxid beschleunigt, wobei das Metallion des Metallsalzes oder Metalloxids oxidiert wird. In einem parallelen Verfahrensschritt wird das nun oxidierte Metallion des Metallsalzes oder Metalloxids durch Reaktion mit einem weiteren Hydroperoxidmolekül wieder reduziert, wobei ein Proton von dem Hydroperoxidmolekül abstrahiert wird. Es wird zudem das Hydroperoxidmolekül durch Abstraktion des Protons in ein Peroxidradikal umgewandelt. Das Metallsalz oder Metalloxid, und genauer gesagt das Metallion des Metallsalzes oder Metalloxids wird hierbei reduziert. Das Metallsalz bzw. Metalloxid kann also durch seine Redoxaktivität, und damit seine Wirkung als Reduktionsmittel (Bildung des Sauerstoffatomradikals) und auch als Oxidationsmittel (Bildung des Peroxidradikals), die Bildung zweier unterschiedlicher Radikale aus der erfindungswesentlichen ungesättigten Verbindung generieren, was zur Beschleunigung der Härtung des Korrosionsschutzmittels wesentlich beiträgt, denn die so gebildeten Radikale initiieren und unterhalten sodann die eigentliche radikalische Vernetzungsreaktion der durch radikalische Polymerisation vernetzenden Verbindung. Das Metallsalz bzw. Metalloxid wirkt lediglich katalytisch und wird nicht verbraucht, steht also für die Bildung weiterer Radikale zur Verfügung bis die Vernetzungsreaktion abgeschlossen ist und die durch radikalische Polymerisation vernetzende Verbindung "durchgetrocknet" ist. Dabei können der Vernetzung- bzw. Trocknungsgrad sowie die Geschwindigkeit der Vernetzungsreaktion durch das Mischungsverhältnis "Metalloxid und/oder Metallsalz" zu "ungesättigter Verbindung" gezielt eingestellt und gesteuert werden. Durch das synergistische Zusammenwirken des redoxaktiven Metallsalzes und/oder Metalloxids und der ungesättigten Verbindung kann ein sehr schnell radikalisch vernetzend trocknendes, einen stabilen Korrosionsschutzfilm bildendes Korrosionsschutzmittel bereitgestellt werden.

Übliche weitere Additive, wie z.B. Lösungsmittel, Farbadditive, Füllstoffe, Rheologieadditive, Hautverhinderungsmittel und dergleichen, können das erfindungsgemäße Korrosionsschutzmittel komplettieren.

Die Unteransprüche beinhalten vorteilhafte Weiterbildungen und Ausgestaltungen der Erfindung.

Zur weiteren Beschleunigung der Vernetzungsreaktion wird die ungesättigte Verbindung vorzugsweise so ausgewählt, dass sie mindestens eine allylständige Methylengruppe aufweist. An dieser Methylengruppe wird besonders schnell ein Hydroperoxidmolekül gebildet.

Gemäss der vorliegenden Erfindung ist das redoxaktive Metallsalz oder Metalloxid mindestens ein Eisenoxid und insbesondere FeO, Fe₂O₃ und/oder Fe₃O₄.

Gemäss der vorliegenden Erfindung ist das redoxaktive Metallsalz oder Metalloxid transparent. Die Transparenz hat nicht nur optische Vorteile (keine farbliche Beeinträchtigung durch das erfindungsgemäße Korrosionsschutzmittel), sondern ist auch im Hinblick auf die Katalysegeschwindigkeit vorteilhaft. Es wird angenommen, dass transparente Metallsalze und Metalloxide so kleine Partikel sind und dabei eine so große Oberfläche aufweisen, dass sie besonders leicht oxidierbar bzw. reduzierbar sind.

Bevorzugte ungesättigte Öle umfassen solche pflanzlichen Öle, die Omega-3-Fettsäuren, Omega-6-Fettsäuren und/oder Omega-9-Fettsäuren enthalten. Aus Kostengründen, sowie aufgrund ihrer hohen Reaktionsfreudigkeit mit Sauerstoff ist die ungesättigte Verbindung vorzugsweise ausgewählt aus Leinöl, Erdnussöl, Olivenöl, Distelöl, Walnussöl, Sonnenblumenöl, Rapsöl, Mandelöl, Traubenkernöl, Kürbiskernöl, Linolsäure, Ölsäure, Linolensäure und Naphthensäure.

Weiter vorteilhaft im Lichte einer guten wasserabweisenden Wirkung und hohen mechanischen Stabilität, ist die durch radikalische Polymerisation vernetzende Verbindung vorzugsweise ausgewählt aus ungesättigten Alkydharzen, ungesättigten Acrylharzen und ungesättigten Polyestern.

Gemäß einer weiteren vorteilhaften Weiterbildung des erfindungsgemäßen Korrosionsschutzmittels enthält dieses ferner mindestens eine Metallseife. Geeignete Metallseifen umfassen Zink(II)-seifen und Calcium(II)-seifen. Besonders geeignet sind Calciumstearat und/oder Zinkstearat. Durch die Verwendung von Metallseifen wird ein weiterer Trocknungsmechanismus initiiert: Das Metallion der Metallseife wirkt koordinierend auf polare Gruppen und insbesondere auf Carboxygruppen und Hydroxygruppen. D.h., dass sich das Metallion zwischen die polaren Gruppen, wie sie z.B. in der durch radikalische Polymerisation vernetzenden Verbindung vorliegen können, einlagert und dadurch eine Art physikalischer Vernetzung ermöglicht. Dies trägt zur Gesamtvernetzungsrate und damit zur Trocknungsgeschwindigkeit bei. Vorteilhaft beträgt ein Anteil der ungesättigten Verbindung 1,5 bis 2,1 Gew.-%, insbesondere 1,8 bis 1,9 Gew.-%, bezogen auf das Gesamtgewicht des Korrosionsschutzmittels. So kann eine hohe Reaktionsgeschwindigkeit der Vernetzungsreaktion gefördert werden, ohne übermäßig Nebenreaktionen, die eine Ausbildung der zwei- oder dreidimensionalen vernetzten Struktur der durch radikalische Polymerisation vernetzenden Verbindung hemmen, zu fördern.

Aus demselben Grund beträgt ein Anteil des redoxaktiven Metallsalzes und/oder Metalloxids 0,0015 bis 0,004 Gew.-% und insbesondere 0,002 bis 0,003 Gew.-%, bezogen auf das Gesamtgewicht des Korrosionsschutzmittels. Sind mehrere Metallsalze und/oder Metalloxide vorhanden, so beziehen sich die Mengenangaben der Anteil auf die Summe aller Metallsalze und Metalloxide.

Durch die vorteilhafte Weiterbildung dass ein Verhältnis des Anteils des redoxaktiven Metallsalzes und/oder Metalloxids zum Anteil der ungesättigten Verbindung 0,1 zu 99,9 bis 0,2 zu 99,8 beträgt, wird bei hoher Reaktionsfähigkeit des Korrosionsschutzmittels die Kostenstruktur des Korrosionsschutzmittels optimiert. Darüber hinaus wird durch das angegebene Verhältnis das synergistische Zusammenwirken des Metallsalzes bzw. Metalloxids und der ungesättigten Verbindung gefördert.

Ferner vorteilhaft beträgt ein Anteil der Metallseife 0,01 bis 0,10 Gew.-% und insbesondere 0,25 bis 0,07 Gew.-%, bezogen auf das Gesamtgewicht des Korrosionsschutzmittels. Dies ermöglicht ein gutes "Durchtrocknen" der durch radikalische Polymerisation vernetzenden Verbindung bei gleichzeitig maximaler Ausbildung von Quervernetzungen durch oxidative Härtung, wodurch ein besonders strapazierfähiger Korrosionsschutzfilm gebildet werden kann.

Ebenfalls erfindungsgemäß wird auch ein Verfahren zum Konservieren eines Hohlraumes beschrieben. Das Verfahren umfasst die Schritte des i) Herstellens einer ersten Komponente und ii) Herstellen einer zweiten Komponente. Die erste Komponente umfasst mindestens eine ungesättigte Verbindung, ausgewählt aus ungesättigten Ölen und/oder ungesättigten Fettsäuren und mindestens ein redoxaktives Metallsalz und/oder Metalloxid. Die zweite Komponente umfasst mindestens ein Korrosionsschutzadditiv und mindestens eine durch radikalische Polymerisation vernetzende Verbindung. Weitere funktionale Additive, wie z.B. Lösungsmittel, Rheologieadditive, Füllstoffe, farbgebende Additive und dergleichen, können zugesetzt werden. Die erste Komponente und die zweite Komponente werden separat und insbesondere unter Sauerstoffausschluss aufbewahrt. Dies verhindert eine vorzeitige Reaktion. Erst bei Applikation der ersten und der zweiten Komponente erfolgt die Ausbildung eines Korrosionsschutzfilmes, die durch eine sauerstoffhaltige Atmosphäre initiiert wird. Bezüglich des hierfür postulierten Reaktionsmechanismus' wird auf die Ausführungen zum vorstehend beschriebenen erfindungsgemäßen Korrosionsschutzmittel verwiesen. Die erste Komponente und die zweiten Komponente werden zur Applikation mittels eines 2-Komponenten-Spritzverfahrens in sauerstoffhaltiger Atmosphäre auf ein zu konservierendes Bauteil mit gewünschter Schichtdicke aufgespritzt. Ein Vermischen der ersten Komponente und der zweiten Komponente kann durch schichtweise Übereinander-Applikation erfolgen, kann aber vorteilhaft vorab auch in einem Mischkopf eines 2-Komponenten-Applikators, ausgeführt werden.

Das erfindungsgemäße Verfahren ist besonders gut geeignet für eine Konservierung von Hohlräumen in einer Fahrzeugkarosserie. Das Verfahren ist einfach, ohne hohen technischen Aufwand umsetzbar und ermöglicht die Ausbildung eines qualitativ hochwertigen Korrosionsschutzfilms mit hoher Reaktionsgeschwindigkeit, ohne dass es einer manuellen oder maschinellen Nachbearbeitung bedarf.

Bezüglich vorteilhafter Weiterbildungen des erfindungsgemäßen Verfahrens wird additiv auf die Ausgestaltungen und Weiterbildungen des erfindungsgemäßen Korrosionsschutzmittels verwiesen, die auch auf das erfindungsgemäße Verfahren Anwendung finden.

Die Reaktionsgeschwindigkeit der Vernetzungsreaktion kann weiter vorteilhaft dadurch gefördert werden, dass eine Temperatureinwirkung von Temperaturen zwischen 40 °C bis 80 °C, insbesondere zwischen 55 °C und 65 °C ermöglicht wird. Dies bedeutet, dass die Vernetzungsreaktion vorteilhaft bei Temperaturen zwischen 40 °C und 80 °C durchgeführt wird, was besonders einfach durch Umsetzung des Verfahrens in einem Ultraschallbad erzielt werden kann. Hierzu werden alle das Korrosionsschutzmittel bildenden Verbindungen vorab gemischt, dann mittels Ultraschall aktiviert und anschließend appliziert.

Weitere Einzelheiten, Merkmale und Vorteile der Erfindung ergeben sich aus der nachfolgenden Beschreibung und den Figuren. Es zeigen:
- Figur 1: eine Übersicht über die Reaktionen eines Korrosionsschutzmittels gemäß einer vorteilhaften Weiterbildung der Erfindung und
- Figur 2: eine schematische Darstellung des Verfahrens zum Konservieren eines Hohlraumes gemäß einer vorteilhaften Weiterbildung.

Die vorliegende Erfindung wird anhand von Ausführungsbeispielen im Detail erläutert. In den Figuren sind nur die hier interessierenden Aspekte in Bezug auf das erfindungsgemäße Korrosionsschutzmittel bzw. das erfindungsgemäße Verfahren zum Konservieren eines Hohlraumes dargestellt, alle übrigen Aspekte sind der Übersichtlichkeit halber weggelassen.

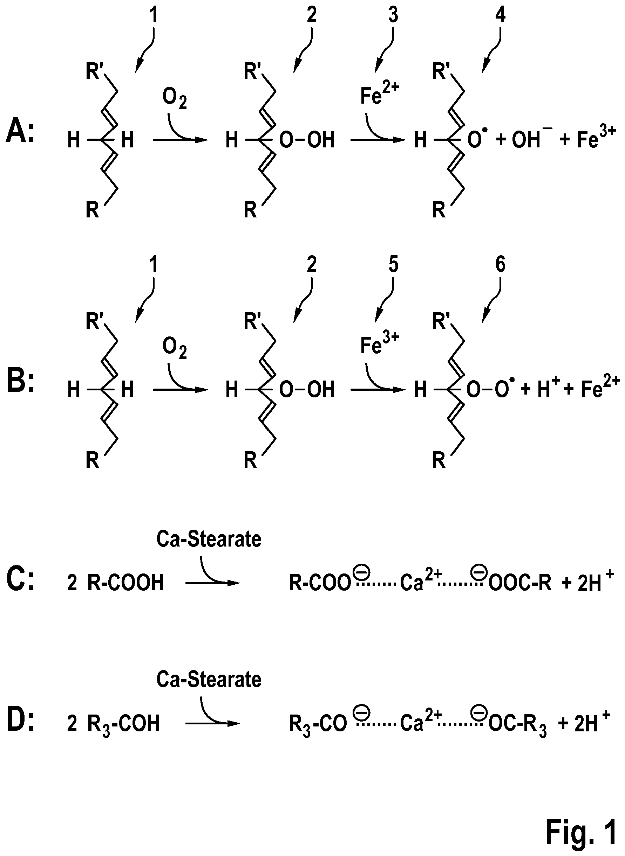

Im Detail zeigt Figur 1 vier unterschiedliche Reaktionen A-D, die nach Applikation eines Korrosionsschutzmittels gemäß einer vorteilhaften Weiterbildung der Erfindung ablaufen können. Gemäß Reaktion A reagiert zunächst eine ungesättigte Verbindung 1 mit Luftsauerstoff O₂ unter Bildung eines Hydroperoxidmoleküls 2. Diese Reaktion wird dadurch ermöglicht, dass die ungesättigte Verbindung ein ungesättigtes Öl bzw. eine ungesättigte Fettsäure ist. Im vorliegenden Fall handelt es sich um eine zweifach ungesättigte Verbindung, die im Einzelnen nicht weiter beschränkt ist und beliebige Reste R, R' tragen kann. Die Anlagerung von Sauerstoff wird dadurch erleichtert, dass das Diradikal Sauerstoff zwischen die C-H-Bindung einer allylständigen Methylengruppe insertiert wird. Sodann erfolgt durch ein redoxaktives Metallsalz und/oder Metalloxid 3 unter Oxidation des Metallsalzes bzw. Metalloxids, also unter Wirkung des Metallsalzes oder Metalloxids als Reduktionsmittel, eine Reduzierung des Hydroperoxidmoleküls 2 zu einem Molekül mit einem Sauerstoffatomradikal 4. Beispielhaft wird hier Fe²⁺ als das Hydroperoxidmolekül 2 spaltende Metall eines Metalloxids oder Metallsalzes dargestellt.

Gemäß Reaktion B wird zunächst aus einer ungesättigten Verbindung 1, die nicht zwingend mit der ungesättigten Verbindung 1 aus Reaktion A übereinstimmen muss, jedoch der Einfachheit halber analog dargestellt wird, unter Sauerstoffeinwirkung ein Hydroperoxidmolekül 2 gebildet. Das Hydroperoxidmolekül 2 wird auch in Reaktion B unter Bildung eines Radikals gespaltet, jedoch wirkt hier ein redoxaktives Metallsalz bzw. Metalloxid 5 ein, das im Vergleich zum redoxaktiven Metallsalz bzw. Metalloxid 3 eine höhere Oxidationsstufe hat (hier beispielhaft Fe³⁺). Dadurch wird das Hydroperoxidradikal 2 an anderer Stelle gespaltet, so dass ein Peroxidradikalmolekül 6, ein Proton und Fe²⁺ durch Oxidation des Hydroperoxidmoleküls 2 unter gleichzeitiger Reduktion von Fe³⁺ zu Fe²⁺ gebildet wird.

Durch die Redoxaktivität des Metallsalzes bzw. Metalloxids 3, 5 werden somit zwei unterschiedliche Radikale aus der ungesättigten Verbindung gebildet. Diese Radikale 4, 6 initiieren und unterhalten im Folgenden die Vernetzungsreaktion einer durch radikalische Polymerisation vernetzenden Verbindung, was bei sehr kurzer Reaktionszeit für die Vernetzungsreaktion und damit einer hohen Trocknungsrate, zur Ausbildung eines stabilen, wasserbeständigen Korrosionsschutzfilms führt.

Reaktionen C und D veranschaulichen das sogenannte Durchtrocknen bzw. Hilfstrocknen. Hierbei erfolgt das koordinative Binden einer Metallseife (im Beispiel von Figur 1: Calciumstearat) zwischen zwei Moleküle einer Carbondsäure (Reaktion C) und zwischen zwei Moleküle eines Alkohols (Reaktion D), jeweils unter Freisetzung von zwei Protonen. Auch hierdurch wird ein zusätzliches Vernetzen über polare Gruppen, beispielsweise der durch radikalische Polymerisation vernetzenden Verbindung, ausgeführt, was ebenfalls zur Trocknung des erfindungsgemäßen Korrosionsschutzmittels beiträgt und die Trocknungsrate und Trocknungsgeschwindigkeit des Korrosionsschutzmittels erhöht.

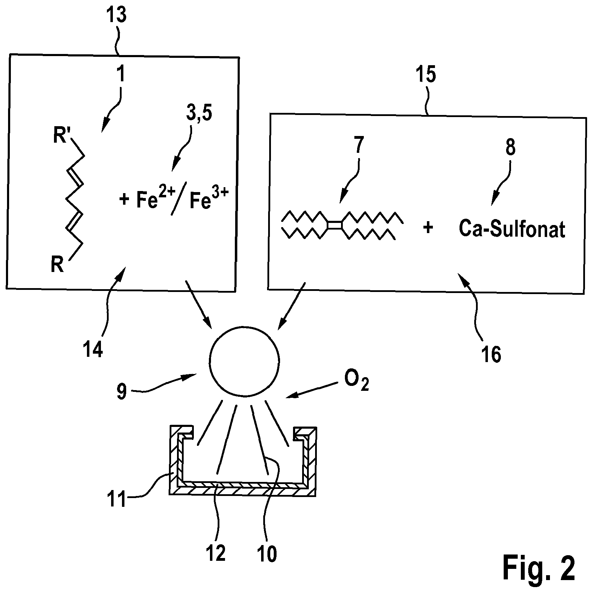

Figur 2 ist eine schematische Darstellung eines Verfahrens zum Konservieren eines Hohlraumes gemäß einer vorteilhaften Weiterbildung. In einem ersten Vorratsbehältnis 13 wird eine erste Komponente 14, die eine ungesättigte Verbindung 1, die aus ungesättigten Ölen und/oder ungesättigten Fettsäuren ausgewählt ist und ein redoxaktives Metallsalz und/oder Metalloxid 2 enthält, unter Sauerstoffausschluss bevorratet. In einem zweiten Vorratsbehältnis 15 wird eine zweite Komponente 16 bevorratet, die mindestens eine durch radikalische Polymerisation vernetzende Verbindung 7 und ein Korrosionsschutzadditiv 8 (hier beispielhaft als Ca-Sulfonat dargestellt) enthält, ebenfalls vorteilhaft unter Sauerstoffausschluss. Die erste Komponente 14 und die zweite Komponente 16 werden einem Mischkopf eines 2-Komponenten-Applikators 9 zugeführt und dort miteinander sowie mit Sauerstoff vermischt. Alternativ kann Sauerstoff auch erst bei Applikation des Korrosionsschutzmittels zugeführt werden. Hierdurch wird das reaktive Korrosionsschutzmittel 10 erhalten, das die in Figur 1 dargestellten Reaktionen A und B sowie eine Vernetzungsreaktion mit der durch radikalische Polymerisation vernetzenden Verbindung 7 eingeht. So kann durch Aufspritzen des Korrosionsschutzmittels 10 auf ein metallisches Werkstück 11 unter Anwendung eines 2-Komponenten-Spritzverfahren, beispielsweise auf ein einen Hohlraum bildendes Werkstück 11, auf dessen Oberfläche ein stabiler, schnell trocknender, d.h. schnell vernetzender Korrosionsschutzfilm 12 gebildet werden, der das Werkstück 11 vor Korrosion in feuchter Umgebung schützt. Durch die mit hoher Reaktionsrate ausgeführte Vernetzungsreaktion ist ein Nacharbeiten des Werkstücks 11, z.B. durch Entfernen von nicht reagierten oder überschüssigen Resten des Korrosionsschutzmittels 10 nicht notwendig. Das Verfahren kann somit kostengünstig und schnell, ohne hohen technischen Aufwand umgesetzt werden. Es werden hoch qualitative Korrosionsschutzfilme 12 erhalten.

Eine zusätzliche Beschleunigung der Trocknungsrate des Korrosionsschutzmittels 10 kann durch Zufügen mindestens einer Metallseife zum Korrosionsschutzmittel 10 erzielt werden. Vorteilhaft wird die Metallseife hierzu der zweiten Komponente 16 beigemengt.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste:

- 1: ungesättigte Verbindung
- 2: Hydroperoxidmolekül
- 3: redoxaktives Metallsalz/Metalloxid
- 4: Molekül mit einem Sauerstoffatomradikal
- 5: redoxaktives Metallsalz/Metalloxid
- 6: Peroxidradikalmolekül
- 7: durch radikalische Polymerisation vernetzende Verbindung
- 8: Korrosionsschutzadditiv
- 9: 2-Komponenten-Applikator
- 10: Korrosionsschutzmittel
- 11: Werkstück
- 12: Korrosionsschutzfilm
- 13: erstes Vorratsbehältnis
- 14: erste Komponente
- 15: zweites Vorratsbehältnis
- 16: zweite Komponente

## Patentansprüche

1. Korrosionsschutzmittel, insbesondere zur Hohlraumkonservierung enthaltend:
- mindestens ein Korrosionsschutzadditiv (8),
- mindestens eine ungesättigte Verbindung (1), ausgewählt aus ungesättigten Ölen und/oder ungesättigten Fettsäuren,
- mindestens ein redoxaktives Metallsalz und/oder Metalloxid (3, 5) und
- mindestens eine durch radikalische Polymerisation vernetzende Verbindung (7)
**dadurch gekennzeichnet, dass**
das redoxaktive Metallsalz oder Metalloxid (3, 5) transparent ist,
ein Anteil des redoxaktiven Metallsalzes und/oder Metalloxids (3, 5) 0,0015 bis 0,004 Gew.-% beträgt, bezogen auf das Gesamtgewicht des Korrosionsschutzmittels, und das redoxaktive Metallsalz oder Metalloxid (3, 5) ein Eisenoxid ist.

2. Korrosionsschutzmittel nach Anspruch 1, **dadurch gekennzeichnet, dass** die ungesättigte Verbindung (1) eine allylständige Methylengruppe aufweist.

3. Korrosionsschutzmittel nach einem der vorhergehenden Ansprüche, **dadurch gekennzeichnet, dass** das Eisenoxid FeO, Fe₂O₃ oder Fe₃O₄ ist.

4. Korrosionsschutzmittel nach einem der vorhergehenden Ansprüche, **dadurch gekennzeichnet, dass** die ungesättigte Verbindung (1) ausgewählt ist aus Leinöl, Erdnussöl, Olivenöl, Distelöl, Walnussöl, Sonnenblumenöl, Rapsöl, Mandelöl, Traubenkernöl, Kürbiskernöl, Linolsäure, Ölsäure, Linolensäure und Naphthensäure.

5. Korrosionsschutzmittel nach einem der vorhergehenden Ansprüche, **dadurch gekennzeichnet, dass** die durch radikalische Polymerisation vernetzende Verbindung (7) ausgewählt ist aus ungesättigten Alkydharzen, ungesättigten Acrylharzen und ungesättigten Polyestern.

6. Korrosionsschutzmittel nach einem der vorhergehenden Ansprüche, ferner enthaltend mindestens eine Metallseife, insbesondere Calciumstearat und/oder Zinkstearat.

7. Korrosionsschutzmittel nach einem der vorhergehenden Ansprüche, **dadurch gekennzeichnet, dass** ein Anteil der ungesättigten Verbindung (1) 1,5 bis 2,1 Gew.-%, insbesondere 1,8 bis 1,9 Gew.-%, bezogen auf das Gesamtgewicht des Korrosionsschutzmittels, beträgt.

8. Korrosionsschutzmittel nach einem der vorhergehenden Ansprüche, **dadurch gekennzeichnet, dass** ein Anteil des redoxaktiven Metallsalzes und/oder Metalloxids (3, 5) 0,002 bis 0,003 Gew.-%, bezogen auf das Gesamtgewicht des Korrosionsschutzmittels, beträgt.

9. Korrosionsschutzmittel nach einem der vorhergehenden Ansprüche, **dadurch gekennzeichnet, dass** ein Verhältnis des Anteils des redoxaktiven Metallsalzes und/oder Metalloxids (3, 5) zum Anteil der ungesättigten Verbindung (1) 0,1 zu 99,9 bis 0,2 zu 99,8 beträgt.

10. Korrosionsschutzmittel nach einem der Ansprüche 6 bis 9, **dadurch gekennzeichnet, dass** ein Anteil der Metallseife 0,01 bis 0,10 Gew.-%, insbesondere 0,25 bis 0,07 Gew.-%, bezogen auf das Gesamtgewicht des Korrosionsschutzmittels, beträgt.

11. Verfahren zum Konservieren eines Hohlraumes, insbesondere in einer Fahrzeugkarosserie, umfassend die Schritte:
Herstellen einer ersten Komponente (14), umfassend mindestens eine ungesättigte Verbindung (1), ausgewählt aus ungesättigten Ölen und/oder ungesättigten Fettsäuren und mindestens ein redoxaktives Metallsalz und/oder Metalloxid (3, 5), wobei das redoxaktive Metallsalz oder Metalloxid (3, 5) transparent ist, wobei ein Anteil des redoxaktiven Metallsalzes und/oder Metalloxids (3, 5) 0,0015 bis 0,004 Gew.-% beträgt, bezogen auf das Gesamtgewicht der ersten Komponente (14) und der zweiten Komponente (16), und wobei das redoxaktive Metallsalz oder Metalloxid (3, 5) ein Eisenoxid ist,
- Herstellen einer zweiten Komponente (16), umfassend mindestens ein Korrosionsschutzadditiv (8) und mindestens eine durch radikalische Polymerisation vernetzende Verbindung (7) und
- Aufspritzen der ersten Komponente (14) und der zweiten Komponente (16) mittels eines 2-Komponenten-Spritzverfahrens in sauerstoffhaltiger Atmosphäre.

12. Verfahren nach Anspruch 11, **gekennzeichnet durch** eine Temperatureinwirkung von Temperaturen zwischen 40 °C bis 80 °C, insbesondere zwischen 55 °C und 65 °C.

## Claims

1. An anti-corrosion agent, especially for preserving cavities, containing:
- at least one anti-corrosion additive (8),
- at least one unsaturated compound (1), selected from unsaturated oils and/or unsaturated fatty acids,
- at least one redox-active metal salt and/or metal oxide (3, 5), and
- at least one compound (7) which cross-links by radical polymerisation,
**characterised in that**
the redox-active metal salt or metal oxide (3, 5) is transparent,
a proportion of the redox-active metal salt and/or metal oxide (3, 5) amounts to 0.0015 to 0.004 wt.%, relative to the total weight of the anti-corrosion agent, and the redox-active metal salt or metal oxide (3, 5) is an iron oxide.

2. An anti-corrosion agent according to Claim 1, **characterised in that** the unsaturated compound (1) has an allylic methylene group.

3. An anti-corrosion agent according to one of the preceding claims, **characterised in that** the iron oxide is FeO, Fe₂O₃ or Fe₃O₄.

4. An anti-corrosion agent according to one of the preceding claims, **characterised in that** the unsaturated compound (1) is selected from linseed oil, peanut oil, olive oil, safflower oil, walnut oil, sunflower oil, rapeseed oil, almond oil, grapeseed oil, pumpkin seed oil, linoleic acid, oleic acid, linolenic acid and naphthenic acid.

5. An anti-corrosion agent according to one of the preceding claims, **characterised in that** the compound (7) which cross-links by radical polymerisation is selected from unsaturated alkyd resins, unsaturated acrylic resins and unsaturated polyesters.

6. An anti-corrosion agent according to one of the preceding claims, further containing at least one metal soap, especially calcium stearate and/or zinc stearate.

7. An anti-corrosion agent according to one of the preceding claims, **characterised in that** a proportion of the unsaturated compound (1) amounts to 1.5 to 2.1 wt.%, especially 1.8 to 1.9 wt.%, relative to the total weight of the anti-corrosion agent.

8. An anti-corrosion agent according to one of the preceding claims, **characterised in that** a proportion of the redox-active metal salt and/or metal oxide (3, 5) amounts to 0.002 to 0.003 wt.%, relative to the total weight of the anti-corrosion agent.

9. An anti-corrosion agent according to one of the preceding claims, **characterised in that** a ratio of the proportion of the redox-active metal salt and/or metal oxide (3, 5) to the proportion of the unsaturated compound (1) amounts to 0.1 to 99.9 to 0.2 to 99.8.

10. An anti-corrosion agent according to one of Claims 6 to 9, **characterised in that** a proportion of the metal soap amounts to 0.01 to 0.10 wt.%, especially 0.25 to 0.07 wt.%, relative to the total weight of the anti-corrosion agent.

11. A method for preserving a cavity, especially in a vehicle body, comprising the steps:
- producing a first component (14), comprising at least one unsaturated compound (1), selected from unsaturated oils and/or unsaturated fatty acids, and at least one redox-active metal salt and/or metal oxide (3, 5), wherein the redox-active metal salt or metal oxide (3, 5) is transparent, wherein a proportion of the redox-active metal salt and/or metal oxide (3, 5) amounts to 0.0015 to 0.004 wt.%, relative to the total weight of the first component (14) and of the second component (16), and
wherein the redox-active metal salt or metal oxide (3, 5) is an iron oxide,
- producing a second component (16), comprising at least one anti-corrosion additive (8) and at least one compound (7) which cross-links by radical polymerisation, and
- spraying on the first component (14) and the second component (16) by means of a two-component spraying method in an oxygen-containing atmosphere.

12. A method according to Claim 11, **characterised by** the action of temperature by temperatures of between 40°C to 80°C, especially between 55°C and 65°C.

## Revendications

1. Agent anticorrosion en particulier destiné à la préservation d'un espace creux comprenant :
- au moins un additif anticorrosion (8)
- au moins un composé insaturé (1) choisi parmi des huiles insaturées et/ou des acides gras insaturés,
- au moins un sel métallique et/ou un oxyde métallique (3, 5) ayant une activité redox, et
- au moins un composé (7) susceptible d'être réticulé par polymérisation radicalaire,
**caractérisé en ce que**
le sel métallique ou l'oxyde métallique (3, 5) ayant une activité redox est transparent,
la proportion de sel métallique et/ou d'oxyde métallique (3, 5) ayant une activité redox est de 0,0015 à 0,004 % en poids,
par rapport au poids total de l'agent anticorrosion, et
le sel métallique ou l'oxyde métallique (3, 5) ayant une activité redox est un oxyde de fer.

2. Agent anticorrosion conforme à la revendication 1,
**caractérisé en ce que**
le composé insaturé (1) comporte un groupe méthylène résistant aux allyl.

3. Agent anticorrosion conforme à l'une des revendications précédentes
**caractérisé en ce que**
l'oxyde de fer est FeO, Fe₂O₃ ou Fe₃O₄.

4. Agent anticorrosion conforme à l'une des revendications précédentes
**caractérisé en ce que**
le composé insaturé (1) est choisi dans le groupe formé par l'huile de lin, l'huile de noisette, l'huile d'olive, l'huile de carthame, l'huile de noix, l'huile de tournesol, l'huile de colza, l'huile d'amande, l'huile de grains de raisin, l'huile de graines de potiron, l'acide linoléique, l'acide oléique, l'acide linolénique, et l'acide naphténique.

5. Agent anticorrosion conforme à l'une des revendications précédentes,
**caractérisé en ce que**
le composé susceptible d'être réticulé par polymérisation radicalaire (7) est choisi parmi les résines alkyde insaturées, les résines acryliques insaturées et les polyesters insaturés.

6. Agent anticorrosion conforme à l'une des revendications précédentes,
renfermant en outre au moins un savon métallique, en particulier du stéarate de calcium et/ou du stéarate de zinc.

7. Agent anticorrosion conforme à l'une des revendications précédentes,
**caractérisé en ce que**
la proportion de composé insaturé (1) est de 1,5 à 2,1 % en poids en particulier de 1,8 à 1,9 % en poids par rapport au poids total de l'agent anticorrosion.

8. Agent anticorrosion conforme à l'une des revendications précédentes,
**caractérisé en ce que**
la proportion de sel métallique et/ou d'oxyde métallique (3, 5) ayant une activité redox est de 0,002 à 0,003 % en poids par rapport au poids total de l'agent anticorrosion.

9. Agent anticorrosion conforme à l'une des revendications précédentes,
**caractérisé en ce que**
le rapport entre la proportion de sel métallique et/ou d'oxyde métallique (3, 5) ayant une activité redox et la proportion de composé insaturé (1) est de 0,1 à 99,9 à 0,2 à 99,8.

10. Agent anticorrosion conforme à l'une des revendications 6 à 9,
**caractérisé en ce que**
la proportion de savon métallique est de 0,01 à 0,10 % en poids en particulier de 0,25 à 0,07 % en poids par rapport au poids total de l'agent anticorrosion.

11. Procédé de préservation d'un espace creux, en particulier dans la carrosserie d'un véhicule comprenant des étapes consistant à :
- préparer un premier composant (14) renfermant au moins un composé insaturé (1) choisi parmi des huiles insaturées et/ou des acides gras insaturés et au moins un sel métallique et/ou un oxyde métallique (3, 5) ayant une activité redox, le sel métallique ou l'oxyde métallique (3, 5) ayant une activité redox étant transparent, la proportion de sel métallique et d'oxyde métallique (3, 5) ayant une activité redox étant de 0,0015 à 0,004 % en poids par rapport au poids total du premier composant (14) et d'un second composant (16) et le sel métallique ou l'oxyde métallique (3, 5) ayant une activité redox étant un oxyde de fer,
- préparer le second composant (16), ce second composant renfermant au moins un additif anticorrosion (8) et au moins un composé (7) susceptible d'être réticulé par polymérisation radicalaire, et
- pulvériser le premier composant (14) et le second composant (16) au moyen d'un procédé de pulvérisation à deux composants dans une atmosphère renfermant de l'oxygène.

12. Procédé conforme à la revendication 11,
**caractérisé par**
l'action de températures comprise entre 40°C et 80°C, en particulier entre 55°C et 65°C.
